# EUROPÄISCHE PATENTANMELDUNG

(11) **EP 1 081 077 A2**
(43) Veröffentlichungstag der Anmeldung: **07.03.2001**
(21) Anmeldenummer: 00116768.3
(22) Anmeldetag: 03.08.2000
(51) Int. Cl.: B65H 27/00

(54) **Tragbalkeneinheit**

(30) Priorität: 30.08.1999 DE 19941191
(71) Anmelder: Voith Paper Patent GmbH, 89522 Heidenheim (DE)
(72) Erfinder: Bernert, Richard, 89537 Giengen (DE); Kustermann, Martin, Dr., 89522 Heidenheim (DE); Henninger, Christoph, 89522 Heidenheim (DE); Seliger, Martin, 78333 Stockach (DE); Fischer, Franz, 89522 Heidenheim (DE)

(57) **Zusammenfassung**

Eine Tragbalkeneinheit zur Aufnahme wenigstens einer Funktionseinheit in einer Maschine zur Herstellung und/oder Veredelung einer Materialbahn, insbesondere aus Papier oder Karton, umfasst einen ersten Teiltragbalken und einen zweiten Teiltragbalken, wobei der erste Teiltragbalken die Funktionseinheit trägt, wobei der erste Teiltragbalken auf dem zweiten Teiltragbalken abgestützt ist und wobei der erste Teiltragbalken den zweiten Teiltragbalken zumindest abschnittweise umgibt.

## Beschreibung

Die Erfindung betrifft eine Tragbalkeneinheit zur Aufnahme wenigstens einer Funktionseinheit in einer Maschine zur Herstellung und/oder Veredelung einer Materialbahn, insbesondere aus Papier oder Karton.

Beim Betrieb von Maschinen zur Herstellung und/oder Veredelung einer Materialbahn, insbesondere aus Papier oder Karton, unterliegen Funktionseinheiten, wie beispielsweise Rakeleinrichtungen, und mit ihnen die Tragbalken, auf denen die Funktionseinheiten aufgenommen sind, einer Vielzahl unterschiedlicher Belastungen. Mechanische Belastungen beispielsweise führen aufgrund der stets vorhandenen Elastizität der zur Herstellung der Tragbalken oder der Funktionseinheiten verwendeten Werkstoffe, beispielsweise Stahl, ebenso wie thermische Belastungen aufgrund der thermischen Ausdehnung zu Durchbiegungen des Tragbalkens und der Funktionseinheit. Derartige Durchbiegungen verursachen Unregelmäßigkeiten im Prozessablauf und wirken sich somit negativ auf das Prozessergebnis aus.

Eine gewisse Verbesserung der Durchbiegung von Tragbalken und Funktionseinheit kann durch eine geeignete Lagerung bzw. Abstützung des die Funktionseinheit tragenden Tragbalkens erreicht werden. Aus der DE 296 00 016 U ist ein Tragbalken bekannt, der an zwei Stützstellen abgestützt ist, wobei die Stützstellen innerhalb der Längserstreckung des Tragbalkens jeweils in einem Abstand zu den beiden Enden des Tragbalkens angeordnet sind. Um darüber hinaus eine weitergehende Reduzierung der Durchbiegung des Tragbalkens zu erreichen, kann der Tragbalken mit einer Ausgleichsvorrichtung, beispielsweise einem Druckschlauch, ausgestattet sein, welche sich im Inneren des Tragbalkens parallel zu dessen Längsachse erstreckt. Aufgrund der in der DE 296 00 016 U vorgeschlagenen Lagerung des Tragbalkens wird hinsichtlich einer mechanischen Belastung des Balkens eine günstigere Biegelinie erreicht. Nachteilig ist jedoch, dass die dort vorgeschlagene Lagerung für solche Tragbalken ungeeignet ist, welche aus einem Material mit niedrigem thermischen Ausdehnungskoeffizient hergestellt sind. Tragbalken aus thermisch formstabilen Werkstoffen, wie beispielsweise Glas- oder Kohlefaser-verstärkten Kunststoffen, haben sich nämlich bislang als nicht ausreichend biegesteif erwiesen.

Es ist daher Aufgabe dieser Erfindung, eine Konstruktionsweise anzugeben, die den Einsatz thermisch formstabiler Werkstoffe zur Herstellung von Tragbalken in den oben genannten Maschinen ermöglicht.

Diese Aufgabe wird erfindungsgemäß durch eine Tragbalkeneinheit zur Aufnahme wenigstens einer Funktionseinheit in einer Maschine zur Herstellung und/oder Veredelung einer Materialbahn, insbesondere aus Papier oder Karton gelöst, welche einen ersten Teiltragbalken und einen zweiten Teiltragbalken umfasst. Der erste Teiltragbalken trägt die Funktionseinheit und ist auf dem zweiten Teiltragbalken abgestützt. Der erste Teiltragbalken umgibt dabei den zweiten Teiltragbalken zumindest abschnittsweise.

Durch die erfindungsgemäß vorgeschlagene Konstruktionsweise ist es möglich, eine Aufteilung der Stabilitätsfunktionalitäten zwischen dem ersten und dem zweiten Teiltragbalken vorzunehmen. So kann beispielsweise der erste Teiltragbalken aus einem thermisch formstabilen Material, beispielsweise aus Faser-verstärktem Kunststoff, vorzugsweise aus Glasfaser- oder Kohlefaser-verstärktem Kunststoff, hergestellt sein, während der zweite Teiltragbalken so ausgebildet ist, dass die gesamte Tragbalkeneinheit neben der thermischen Formstabilität auch die benötigte mechanische Steifigkeit, insbesondere Biegesteifigkeit erhält.

Der zweite Teiltragbalken kann dabei aus Stahl, vorzugsweise aus nicht rostendem Stahl, oder/und ebenfalls aus Faser-verstärktem Kunststoff, vorzugsweise aus Glasfaser- oder Kohlefaser-verstärktem Kunststoff, hergestellt sein. Insbesondere im Falle einer Kunststoffkonstruktion des zweiten Teiltragbalkens kann außer der ausreichenden Biegesteifigkeit der Gesamtanordnung aufgrund der geringeren Dichte Faser-verstärkter Kunststoffe auch eine Gewichtsreduzierung gegenüber einer herkömmlichen Tragbalken-Bauweise erzielt werden.

Um eine hohe Standzeit der Funktionseinheit unter den in einer Maschine zur Herstellung und/oder Veredelung einer Materialbahn, insbesondere aus Papier oder Karton, herrschenden Bedingungen gewährleisten zu können, ist es vorteilhaft, die Funktionseinheit aus Stahl, vorzugsweise aus nicht rostendem Stahl, zu fertigen.

Der in den Maschinen des oben genannten Typs in der Regel knapp bemessene Bauraum kann effektiv genutzt werden, wenn die Längsachsen des ersten Teiltragbalkens und des zweiten Teiltragbalkens zumindest in einem unverformten Zustand in einem Bereich gemeinsamer Erstreckung im Wesentlichen parallel zueinander angeordnet sind.

Eine weitere Verbesserung der Formstabilität der Tragbalkeneinheit ist dadurch möglich, dass der erste Teiltragbalken am zweiten Teiltragbalken, wie in der DE 296 00 016 U beschrieben, auf mindestens zwei Stützen abgestützt ist, die in Längsrichtung des ersten Teiltragbalkens vorzugsweise jeweils in einem vorbestimmten Abstand zu je einem stirnseitigen Ende des ersten Teiltragbalkens angeordnet sind. Durch eine derartige Abstützung des ersten Teiltragbalkens am zweiten Teiltragbalken kann ein günstiges Biegeverhalten des ersten Teiltragbalkens erreicht werden.

Insbesondere bei einer längs der Arbeitsbreite der Materialbahn gleichmäßigen Belastung der Tragbalkeneinheit und der darauf aufgenommenen Funktionseinheit wie sie in Maschinen zur Herstellung oder/und Veredelung von Materialbahnen erwünscht ist, kann es vorteilhaft sein, dass die wenigstens zwei Stützen in Längsrichtung des ersten Teiltragbalkens symmetrisch zur Längsmitte des ersten Teiltragbalkens angeordnet sind. Durch eine derartige symmetrische Anordnung der Lagerstellen werden durch eine über die Arbeitsbreite der Materialbahn konstante Last auf die Funktionseinheit an den Stützstellen identische Lagerkräfte hervorgerufen, was zu einer symmetrischen und damit insgesamt gleichmäßigen Lastbeaufschlagung der gesamten Tragbalkeneinheit führt. Dies wirkt sich wiederum günstig auf das Prozessergebnis aus. Es hat sich dabei für eine Anordnung der Stützen als besonders günstig erwiesen, wenn der Abstand wenigstens einer der Stützen zu dem zugeordneten stirnseitigen Ende des ersten Teiltragbalkens zwischen etwa 15% und etwa 30%, vorzugsweise etwa 25%, der Länge des ersten Teiltragbalkens beträgt. Grundsätzlich ist es jedoch auch denkbar, die Stützen bezüglich der Längsmitte asymmetrisch anzuordnen.

Im Hinblick auf eine sich lokal oder/und zeitlich verändernde Lastsituation kann eine belastungsgerechte Anpassung der Abstützsituation des ersten Teiltragbalkens auf dem zweiten Teiltragbalken wünschenswert sein. Dazu kann die Position wenigstens einer der Stützen in Querrichtung der Materialbahn veränderbar sein. Hierzu kann wenigstens eine mechanisch oder/und elektrisch oder/und fluidisch betätigbare Stelleinrichtung vorgesehen sein.

Bei der Betrachtung einer belastungsbedingten Biegelinie spielt nicht nur der Linienverlauf als solches, sondern auch die an einer Stelle auftretende maximale Abweichung der deformierten Kontur von der Soll-Kontur eine Rolle. Diese maximale Durchbiegung kann dadurch reduziert werden, dass der erste Teiltragbalken durch wenigstens zwei Stützenpaare am zweiten Teiltragbalken abgestützt ist.

Das Grundprinzip einer derartigen Abstützung ist beispielsweise aus der DE 196 36 184 A1 bekannt. Die genannte Druckschrift beschreibt die Reduzierung der Durchbiegung eines Trägers durch die Aufnahme von Kräften an zwei voneinander gesondert ausgebildeten starren Rahmen, von denen jeder an einem Ende des Trägers durch jeweils ein Stützenpaar abgestützt ist. Unklar ist jedoch, wo an der von Träger und Rahmen gebildeten Einheit zum einen die von einer Funktionseinheit herrührenden Kräfte und zum anderen die von der Abstützung an einem Maschinenerahmen herrührenden Kräfte angreifen. Nachteilig ist jedoch in jedem Fall, dass zu dem eigentlichen Träger zwei weitere Bauteile hinzukommen, die getrennt voneinander gefertigt und unter Einhaltung geringer Fehlertoleranzen montiert werden müssen, Im Gegensatz dazu kommt das erfindungsgemäße Konstruktionsprinzip mit einer aus lediglich zwei Teilen, nämlich den beiden Teiltragbalken gebildeten Einheit aus.

Wie schon im Falle der wenigstens zwei Stützen können auch je nach Belastungsfall die wenigstens zwei Stützenpaare in Längsrichtung des ersten Teiltragbalkens symmetrisch zur Längsmitte des ersten Teiltragbalkens angeordnet sein. Dadurch kann, wie zuvor beschrieben, beispielsweise im Falle einer über die Arbeitsbreite der Materialbahn konstanten Belastung eine insgesamt gleichmäßige Lastbeaufschlagung der Tragbalkeneinheit erreicht werden. Abhängig vom jeweils konkreten Lastfall kann die Biegelinie des ersten Teiltragbalkens durch eine Anordnung der zwei Stützen wenigstens eines Stützenpaares bezüglich der Längsachse des ersten Teiltragbalkens an im Wesentlichen der gleichen Längsposition bzw. an unterschiedlichen Längspositionen in günstiger Weise beeinflusst werden.

Während des Betriebs ist es nötig, die Tragbalkeneinheit zum einen sicher abstützen und zum anderen gezielt positionieren oder/und orientieren zu können. Es kann deshalb wenigstens eine der Stützen derart ausgebildet oder/und angeordnet sein, dass sie Kräfte oder/und Momente vom ersten Teiltragbalken zum zweiten Teiltragbalken und umgekehrt übertragen kann. Dabei kommt es besonders auf die Übertragung von Kräften von der Funktionseinheit in Richtung eines laufenden Untergrundes sowie von Momenten um die Längsrichtung des ersten Teiltragbalkens an, da Kräfte und/oder Momente mit diesen Wirkrichtungen bevorzugt der Anstellung der auf der Tragbalkeneinheit aufgenommenen Funktionseinheit gegen den laufenden Untergrund dienen.

In diesem Zusammenhang kann es erwünscht sein, eine Verdrehung des ersten Teiltragbalkens und des zweiten Teiltragbalkens relativ zueinander verhindern zu können, um eine hohe Stabilität verbunden mit einer präzisen Positionier- und Orientierbarkeit der genannten Tragbalkeneinheit erhalten zu können. Dies kann ganz allgemein eine Verdrehung des ersten Teiltragbalkens gegenüber dem zweiten Teiltragbalken in allen drei Raumrichtungen betreffen. Da eine Verdrehung des ersten Teiltragbalkens relativ zum zweiten Teiltragbalken um dessen Längsachse besonders ungünstige Auswirkungen auf das Prozessergebnis hat, wird man üblicherweise vorrangig diese Verdrehung zu vermeiden versuchen.

Im Betrieb können neben statischen und quasi-statischen Lasten auch dynamische Belastungen, wie beispielsweise Vibrationen, auf die Tragbalkeneinheit wirken. Zur Verbesserung bzw. Gewährleistung des Prozessergebnisses kann wenigstens eine Stütze wenigstens ein Dämpfungselement umfassen. Das Dämpfungselement, welches vorzugsweise aus Kunststoff gefertigt sein kann, kann beispielsweise dazu dienen, Unregelmäßigkeiten wie Erschütterungen oder Vibrationen längs des Kraftflusses zwischen erstem Teiltragbalken und zweitem Teiltragbalken zu mindern bzw. zu unterdrücken und somit die Lagestabilität des die Funktionseinheit tragenden ersten Teiltragbalkens gegenüber äußeren Einflüssen zu verbessern.

Zur Vermeidung einer Überbelastung des Dämpfungselementes kann wenigstens eine Stütze wenigstens ein im Verhältnis zur Elastizität des Dämpfungselementes im Wesentlichen starres Element umfassen, welches mit dem Dämpfungselement zur Abstützung des ersten Teiltragbalkens auf dem zweiten Teiltragbalken zusammenwirkt. Beispielsweise können das Dämpfungselement und das starre Element so nebeneinander angeordnet sein, dass eine Abstützung des ersten Teiltragbalkens auf dem zweiten Teiltragbalken zunächst durch das Dämpfungselement und ab einer gewissen Grenzverformung dieses Dämpfungselements eine Abstützung durch das starre Element erfolgt.

Eine zuvor bereits erwähnte Verstellung der Position bzw. Orientierung der Tragbalkeneinheit kann in vorteilhafter Weise durchgeführt werden, wenn der zweite Teiltragbalken um eine zur Längsachse des ersten Teiltragbalkens im Wesentlichen parallele Achse drehbar oder/und schwenkbar gelagert ist. Da mit der räumlichen Lage der Tragbalkeneinheit zwangsweise auch die Lage der Funktionseinheit verändert wird, kann die Dreh- oder/und Schwenkachse des zweiten Teiltragbalkens im Wesentlichen mit einer Anstelllinie zusammenfallen, längs derer die Funktionseinheit gegen einen laufenden Untergrund angestellt ist, um so eine für die Funktion der Gesamtanordnung günstige Verstell-Kinematik zu erhalten. Die Funktionsweise kann eine Rakeleinheit sein, beispielsweise mit einer Rakelklinge oder/und einem Rakelstab oder/und einer Luftbürste. Falls sie Funktionseinheit beispielsweise eine Rakelklinge umfasst, ist es vorteilhaft, wenn die Anstelllinie durch die Klingenspitze der Rakelklinge verläuft.

Eine effiziente Ausnutzung des zur Verfügung stehenden Bauraumes kann dadurch erreicht werden, dass die Lagerung des zweiten Teiltragbalkens an je einem seiner Enden auf Führerseite und auf Triebseite der Maschine erfolgt.

Zum Ausgleich belastungsbedingter Deformationen der Tragbalkeneinheit sowie zur gezielten Einstellung der Betriebsverhältnisse, wie zum Beispiel Anstellwinkel und -druck, kann die Tragbalkeneinheit mit wenigstens einer Einrichtung zum Verstellen oder/und Positionieren zusammenwirken. Vorteilhafterweise wirkt die Verstell- und Positioniereinrichtung nur mit dem zweiten Teiltragbalken zusammen, um den die Funktionseinheit tragenden ersten Teiltragbalken nicht zusätzlich mit Verstellkräften unmittelbar zu belasten.

Hinsichtlich der Kontrolle, Wartung oder Reparatur sowie auch im Hinblick auf die Anbringung von Funktionselementen am zweiten Teiltragbalken kann der erste Teiltragbalken im Bereich seiner Längserstreckung Öffnungen aufweisen, durch welche der zweite Teiltragbalken zugänglich ist. Durch eine derartige Öffnung hindurch kann beispielsweise ein Stellelement der Verstell- oder/und Positioniereinrichtung mit dem zweiten Tragbalken im Bereich seiner Längsmitte oder auch im Bereich wenigstens einer Stützstelle zusammenwirken. Dadurch kann je nach Belastungsfall und vorhandenem Bauraum eine günstige Kraftentfaltung der Positionier- oder/und Verstelleinrichtung auf den zweiten Teiltragbalken sichergestellt werden. Es ist jedoch auch denkbar, dass ein Einwirken eines Stellelements einer Verstell- oder/und Positioniereinrichtung an den genannten Orten nicht erwünscht bzw. nicht möglich ist. In einem solchen Fall kann ein derartiges Stellelement mit dem zweiten Tragbalken im Bereich wenigstens einer seiner Lagerstellen zusammenwirken. Ein Stellelement könnte dann, gegebenenfalls über ein Getriebe, an der Lagerstelle des zweiten Teiltragbalkens in diesen ein Drehmoment zu dessen Verdrehung um eine Achse durch beide Lagerstellen des zweiten Teiltragbalkens einleiten. Ebenso ist eine verschiebliche Lagerung des zweiten Teiltragbalkens denkbar, damit die Möglichkeit besteht, Deformationen der Tragbalkeneinheit nicht nur rotatorisch, sondern auch translatorisch auszugleichen.

Um bei hoher mechanischer Stabilität ein möglichst geringes Gesamtgewicht der Tragbalkeneinheit zu erzielen, kann der zweite Teiltragbalken zumindest abschnittsweise rohrartig ausgebildet sein. Außerdem kann die Außenkontur des zweiten Teiltragbalkens der Innenkontur des ersten Teiltragbalkens zumindest im Bereich der gemeinsamen Erstreckung angenähert sein, um die Steifigkeit der Anordnung zu erhöhen.

Der Ausgleich von belastungsbedingten Deformationen der Tragbalkeneinheit kann wesentlich vereinfacht oder sogar automatisiert werden, wenn die Verstell- oder/und Positioniereinrichtung weiterhin eine Erfassungseinheit zum Erfassen einer Verschiebung der Funktionseinheit infolge der Durchbiegung des zweiten Teiltragbalkens sowie eine Auswerteeinheit umfasst, welche basierend auf den Erfassungssignalen der Erfassungseinheit Stellsignale für das wenigstens eine Stellelement ermittelt. Ein effektiver und exakter Ausgleich belastungsbedingter Deformationen der Tragbalkeneinheit ist beispielsweise dann möglich, wenn die Verstell- oder/und Positioniereinrichtung eine Betriebszustandserfassungseinheit umfasst, welche den aktuellen Betriebszustand der Maschine, beispielsweise basierend auf den Parametern Maschinengeschwindigkeit oder/und Linienpressung der Funktionseinheit oder/und Balkenlage oder/und dergleichen, erfasst und dass die Auswerteeinheit weiterhin ein Stellsignal für das wenigstens eine Stellelement basierend auf dem von der Betriebszustandserfassungseinheit erfassten Betriebszustand ermitteln kann.

Ein geeignetes Verfahren zur Regelung der Position und/oder Orientierung der Tragbalkeneinheit kann folgende Schritte umfassen:
- Erfassen der Verlagerung der Funktionseinheit mit einer Erfassungseinheit infolge von Durchbiegung des zweiten Teiltragbalkens,
- Ermitteln von Stellsignalen durch eine Auswerteeinheit, basierend auf den Erfassungssignalen der Erfassungseinheit,
- Positionieren der Tragbalkeneinheit gemäß der ermittelten Stellsignale.

Weiterhin kann die Krafteinwirkung auf den zweiten Teiltragbalken der Tragbalkeneinheit sicher mit einem Verfahren geregelt werden, welches folgende Verfahrensschritte umfassen kann:
- Ermittlung des Betriebszustandes der Anlage, beispielsweise anhand der Parameter Maschinengeschwindigkeit oder/und Linienpressung der Funktionseinheit oder/und Balkenposition oder/und dergleichen durch eine Betriebszustandserfassungseinheit,
- Ermittlung von Stellsignalen für das wenigstens eine Stellelement durch eine Auswerteeinheit, basierend auf dem von der Betriebszustandserfassungseinheit erfassten Betriebszustand,
- Einstellen der Zusatzkraft an einem Stellelement gemäß der ermittelten Stellsignale.

Die vorliegende Erfindung wird nachfolgend mit Bezugnahme auf die beiliegenden Zeichnungen anhand bevorzugter Ausgestaltungsformen beschrieben werden. Es stellt dar:
- Fig. 1: eine schematische Querschnittsansicht einer erfindungsgemäßen Tragbalkeneinheit im unbelasteten Zustand;
- Fig. 2: eine schematische Querschnittsansicht einer erfindungsgemäßen Tragbalkeneinheit im belasteten Zustand;
- Fig. 3: eine schematische Querschnittsansicht einer weiteren Ausbildungsform einer erfindungsgemäßen Tragbalkeneinheit mit Verstelleinrichtung im unbelasteten Zustand;
- Fig. 4: eine schematische Querschnittsansicht einer Ausbildungsform einer erfindungsgemäßen Tragbalkeneinheit mit einer alternativen Anordnung der Verstelleinrichtung im unbelasteten Zustand;
- Fig. 5: eine schematische Querschnittsansicht einer Ausbildungsform einer erfindungsgemäßen Tragbalkeneinheit mit einer weiteren alternativen Anordnung einer Verstelleinrichtung im unbelasteten Zustand;
- Fig. 6: eine schematische Querschnitts-Detailansicht einer in Fig. 5 dargestellten Stütze.

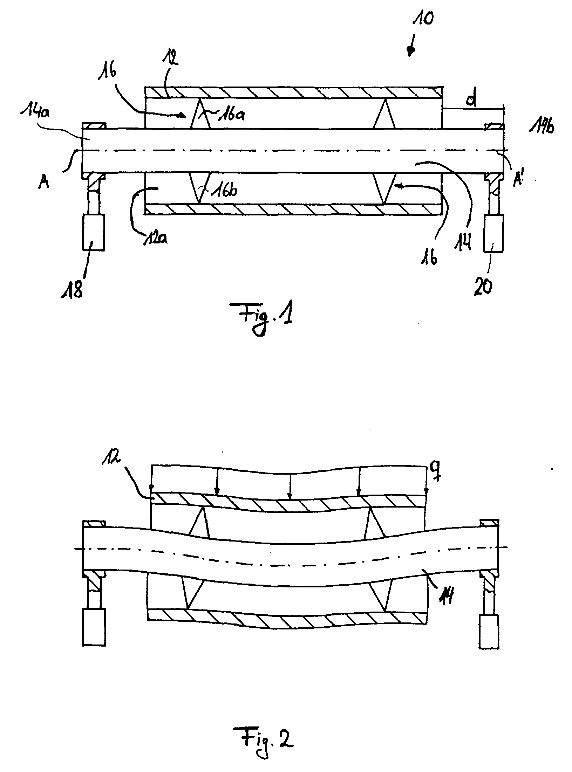

In Fig. 1 ist eine erfindungsgemäße Tragbalkeneinheit in einer Maschine zur Herstellung und/oder Veredelung einer Materialbahn, insbesondere aus Papier oder Karton, allgemein mit 10 bezeichnet. Die erfindungsgemäße Tragbalkeneinheit umfasst einen ersten Teiltragbalken 12 sowie einen zweiten Teiltragbalken 14. Der erste Teiltragbalken 12 ist durch zwei Stützenpaare 16 am zweiten Teiltragbalken 14 abgestützt. Der erste Teiltragbalken ist dabei symmetrisch zur Längsmitte des zweiten Teiltragbalkens 14 so angeordnet, dass seine Längsachse A' im Wesentlichen mit der Längsachse A des zweiten Teiltragbalkens 14 zusammenfällt und der erste Teiltragbalken 12 den zweiten Teiltragbalken 14 umgibt. An dem ersten Teiltragbalken 12 kann eine nicht dargestellte Funktionseinheit aufgenommen sein, beispielsweise eine Rakeleinrichtung.

Der zweite Teiltragbalken 14 ist an seinen beiden Enden 14a und 14b, die beide einen vorbestimmten Abstand d aus dem Innenraum 12a des ersten Teiltragbalkens 12 herausragen, an je einem Lagerbock 18, 20 gelagert.

Der Lagerbock 18 befindet sich auf der Führerseite der Maschine zur Herstellung und/oder Veredelung einer Materialbahn, insbesondere aus Papier oder Karton, der Lagerbock 20 befindet sich auf deren Triebseite. Die beiden Stützenpaare 16 sind symmetrisch zur Längsmitte des zweiten Teiltragbalkens 14 innerhalb der Längserstreckung des ersten Teiltragbalkens 12 angeordnet und umfassen je eine Stütze 16a und 16b. Die Stützen 16a und 16b eines jeden Stützenpaares 16 sind bezüglich der Längsachse A des zweiten Teiltragbalkens an der gleichen Längsposition angeordnet.

In Fig. 2 ist eine Tragbalkeneinheit gemäß Fig. 1 in einem durch eine auf den ersten Teiltragbalken 12 wirkende konstante Streckenlast q hervorgerufenen Verformungszustand dargestellt. Wie in Fig. 2 zur Verdeutlichung des Effektes überhöht dargestellt ist, wirken die Verformungen des ersten Teiltragbalkens 12 und des zweiten Teiltragbalkens 14 so zusammen, dass die konstante Streckenlast q an dem ersten Teiltragbalken 12 lediglich geringe Verformungen hervorruft.

Die Lagerstellen des zweiten Teiltragbalkens 14 befinden sich außerhalb der Maschinenbreite, was zu einer geringeren Beanspruchung des Bauraums innerhalb der Maschinenbreite führt. Durch den großen Lagerabstand der Lagerböcke 18, 20, wird die Neigung des zweiten Teiltragbalkens zur Durchbiegung unter äußerer Last erhöht. Aufgrund der Anordnung der Stützen 16 zwischen dem ersten Teiltragbalken 12 und dem zweiten Teiltragbalken 14 wird trotz der Durchbiegung des zweiten Teiltragbalkens 14 eine günstige Biegelinie des ersten Teiltragbalkens erreicht.

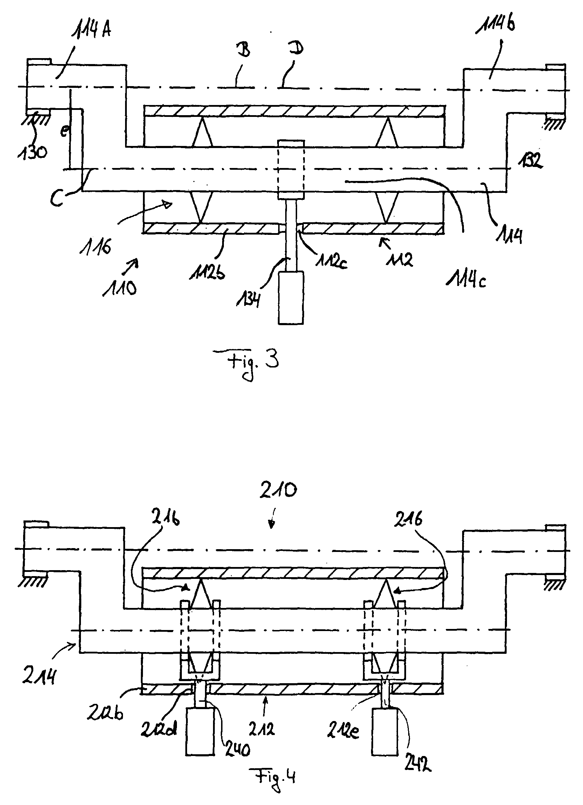

In Fig. 3 ist eine weitere Ausführungsform einer erfindungsgemäßen Tragbalkeneinheit dargestellt, welche im Wesentlichen jener gemäß Fig. 1 entspricht. Daher sind im Folgenden analoge Teile mit gleichen Bezugszeichen versehen wie in Fig. 1, jedoch vermehrt um die Zahl 100.

Darüber hinaus wird die Ausführungsform gemäß Fig. 3 im Folgenden nur insoweit beschrieben werden, als sie sich von der Ausführungsform gemäß Fig. 1 unterscheidet, auf deren Beschreibung hiermit ansonsten ausdrücklich verwiesen sei.

In Fig. 3 ist ein erster Teiltragbalken 112 über zwei Stützenpaare 116 auf einem gekröpften zweiten Teiltragbalken 114 angeordnet. Der zweite Teiltragbalken 114 weist einen führerseitigen Endabschnitt 114a, einen triebseitigen Endabschnitt 114b und einen quer zur gemeinsamen Längsachse B der beiden Endabschnitte 114a, 114b um einen Abstand e ausgekröpften Mittelabschnitt 114c auf. Die Längsachse C des Mittelabschnitts 114c des zweiten Teiltragbalkens 114 verläuft parallel zur gemeinsamen Längsachse B der beiden Endabschnitte 114a, 114b des zweiten Teiltragbalkens 114. Der zweite Teiltragbalken 114 ist an seinen beiden Endabschnitten 114a, 114b an einem führerseitigen Lagerbock 130 und einem triebseitigen Lagerbock 132 um eine Drehachse D drehbar gelagert, welche Drehachse D mit der gemeinsamen Längsachse B der beiden Endabschnitte 114a, 114b des zweiten Teiltragbalkens 114 im Wesentlichen zusammenfällt. Darüber hinaus kann am ersten Teiltragbalken 112 eine Funktionseinheit, beispielsweise eine Rakeleinheit so aufgenommen sein, dass ihre Anstelllinie, bzw. ihre Kontaktlinie mit einem laufenden Untergrund, mit der Drehachse D der Tragbalkeneinheit zusammenfällt.

Der erste Teiltragbalken 112, welcher auf dem Mittelabschnitt 114c des zweiten Teiltragbalkens 114 aufgenommen ist, weist an seiner von den Lagerstellen des zweiten Teiltragbalkens 114 entfernt liegenden Wand 112b eine Öffnung 112c auf. Durch die Öffnung 112c ist ein Stellelement 134 einer Verstell- und Positioniereinheit (nicht dargestellt) hindurchgeführt, welche mit dem zweiten Teiltragbalken 114 im Bereich von dessen Längsmitte verbunden ist und mit diesem zusammenwirkt.

In Fig. 4 ist eine weitere Ausführungsform einer erfindungsgemäßen Tragbalkeneinheit dargestellt, welche im Wesentlichen jener gemäß Fig. 3 entspricht. Daher sind im Folgenden analoge Teile mit gleichen Bezugszeichen versehen wie in Fig. 3, jedoch vermehrt um die Zahl 100. Darüber hinaus wird die Ausführungsform gemäß Fig. 4 im Folgenden nur insoweit beschrieben werden, als sie sich von der Ausführungsform gemäß Fig. 3 unterscheidet, auf deren Beschreibung hiermit ansonsten ausdrücklich verwiesen sei.

Die in Fig. 4 dargestellte Ausführungsform zeigt eine Tragbalkeneinheit 210 mit einem ersten Teiltragbalken 212, der an seiner von den Lagerstellen des zweiten Teiltragbalkens 214 entfernten Wand 212b zwei Öffnungen 212d, 212e aufweist, die im Bereich jeweils eines den ersten Teiltragbalken abstützenden Stützenpaares 216 angeordnet sind. Durch die Öffnungen 212d, 212e sind jeweils ein Stellelement 240, 242 hindurchgeführt, welche mit dem zweiten Teiltragbalken im Bereich der Abstützung des ersten Teiltragbalkens 212 auf dem zweiten Teiltragbalken 214 verbunden sind und mit diesem zusammenwirken.

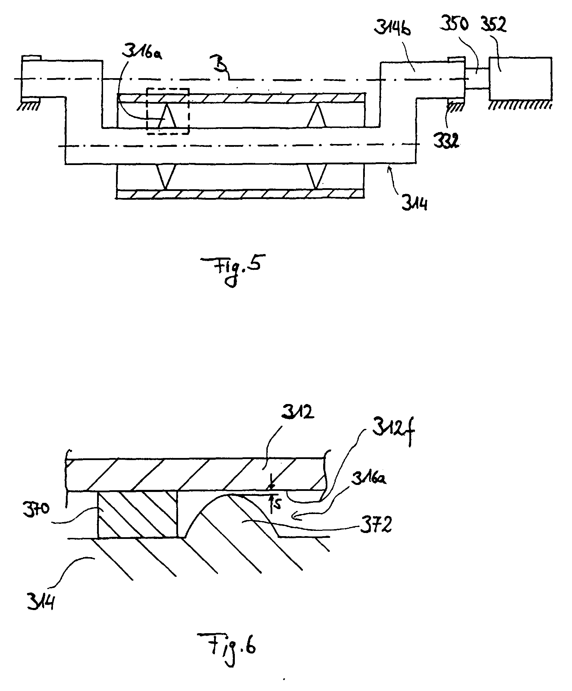

In Fig. 5 ist eine weitere Ausführungsform einer erfindungsgemäßen Tragbalkeneinheit dargestellt, welche im Wesentlichen jener gemäß Fig. 4 entspricht. Daher sind im Folgenden analoge Teile mit gleichen Bezugszeichen versehen wie in Fig. 4, jedoch vermehrt um die Zahl 100. Darüber hinaus wird die Ausführungsform gemäß Fig. 5 im Folgenden nur insoweit beschrieben werden, als sie sich von der Ausführungsform gemäß Fig. 4 unterscheidet, auf deren Beschreibung hiermit ansonsten ausdrücklich verwiesen sei.

Fig. 5 zeigt eine erfindungsgemäße Ausführungsform einer Tragbalkeneinheit, bei der ein Drehmoment zur Veränderung der Winkelposition oder/und der Anstellkraft der Tragbalkeneinheit gegenüber beispielsweise einem laufenden Untergrund in den zweiten Teiltragbalken 314 im Bereich dessen triebseitiger Lagerung eingeleitet wird. Dazu ist eine Welle 350 eines Stellmotors 352 mit dem Endabschnitt 314b des zweiten Teiltragbalkens 314 koaxial bezüglich dessen Drehachse B verbunden.

In Fig. 6 ist der in Fig. 5 strichliniert dargestellte Bereich einer Stütze 316a im Detail dargestellt. Der erste Teiltragbalken 312 ist auf ein zwischen dem ersten Teiltragbalken 312 und dem zweiten Teiltragbalken 314 angeordnetes Dämpfungselement 370 am zweiten Teiltragbalken 314 abgestützt. Das Dämpfungselement 370 kann besipielsweise aus Polyurethan hergestellt sein.

Am zweiten Teiltragbalken 314 ist ein Vorsprung 372 ausgebildet, welcher sich ausgehend vom zweiten Teiltragbalken 314 in Richtung der Innenwand 312f des ersten Teiltragbalkens 312 erstreckt. Er berührt diese jedoch nicht, so dass zwischen dem Vorsprung 372 und der Innenwand 312f des ersten Teiltragbalkens ein Spalt mit der Spalthöhe s verbleibt. Wird nun das Dämpfungselement 370 durch eine auf den ersten Teiltragbalken 312 wirkende Kraft um die Spalthöhe s zusammengedrückt, so kommt der Vorsprung 372 in Kontakt mit der Innenwand 312f des ersten Teiltragbalkens 312 und übernimmt somit eine Abstützfunktion. Aufgrund der materialbedingten geringeren elastischen Nachgiebigkeit des Vorsprungs 372 gegenüber der des Dämpfungselements 370 ist der Vorsprung 372 in der Lage, wesentlich größere Belastungskräfte aufzunehmen als das Dämpfungselement 370. Dadurch wird eine Stütze 316a mit insgesamt guter Dämpfungswirkung bei hohen aufnehmbaren Belastungskräften erreicht.

## Patentansprüche

1. Tragbalkeneinheit zur Aufnahme wenigstens einer Funktionseinheit in einer Maschine zur Herstellung und/oder Veredelung einer Materialbahn, insbesondere aus Papier oder Karton,
dadurch gekennzeichnet, dass die Tragbalkeneinheit einen ersten Teiltragbalken und einen zweiten Teiltragbalken umfasst, wobei der erste Teiltragbalken die Funktionseinheit trägt, wobei der erste Teiltragbalken auf dem zweiten Teiltragbalken abgestützt ist und wobei der erste Teiltragbalken den zweiten Teiltragbalken zumindest abschnittsweise umgibt.

2. Tragbalkeneinheit nach Anspruch 1, dadurch gekennzeichnet, dass der erste Teiltragbalken aus Faser-verstärktem Kunststoff, vorzugsweise aus Glasfaser- oder Kohlefaser-verstärktem Kunststoff, hergestellt ist.

3. Tragbalkeneinheit nach Anspruch 1 oder 2, dadurch gekennzeichnet, dass der zweite Teiltragbalken aus Faser-verstärktem Kunststoff, vorzugsweise aus Glasfaser- oder Kohlefaser-verstärktem Kunststoff, oder/und aus Stahl, vorzugsweise nicht-rostendem Stahl, hergestellt ist.

4. Tragbalkeneinheit nach einem der Ansprüche 1 - 3, dadurch gekennzeichnet, dass die Funktionseinheit aus Stahl, vorzugsweise nicht-rostendem Stahl, gefertigt ist.

5. Tragbalkeneinheit nach einem der Ansprüche 1 - 4, dadurch gekennzeichnet, dass die Längsachsen des ersten Teiltragbalkens und des zweiten Teiltragbalkens zumindest in einem unverformten Zustand in einem Bereich gemeinsamer Erstreckung im Wesentlichen parallel zueinander angeordnet sind.

6. Tragbalkeneinheit nach einem der Ansprüche 1 - 5, dadurch gekennzeichnet, dass der erste Teiltragbalken am zweiten Teiltragbalken auf mindestens zwei Stützen abgestützt ist, die in Längsrichtung des ersten Teiltragbalkens vorzugsweise jeweils in einem vorbestimmten Abstand zu je einem stirnseitigen Ende des ersten Teiltragbalkens angeordnet sind.

7. Tragbalkeneinheit nach Anspruch 6, dadurch gekennzeichnet, dass die wenigstens zwei Stützen in Längsrichtung des ersten Teiltragbalkens symmetrisch zur Längsmitte des ersten Teiltragbalkens angeordnet sind.

8. Tragbalkeneinheit nach einem der Ansprüche 6 oder 7, dadurch gekennzeichnet, dass der Abstand wenigstens einer der Stützen zu dem zugeordneten stirnseitigen Ende des ersten Teiltragbalkens zwischen etwa 15% und etwa 30%, vorzugsweise etwa 25%, der Länge des ersten Teiltragbalkens beträgt.

9. Tragbalkeneinheit nach einem der Ansprüche 6 - 8, dadurch gekennzeichnet, dass der Abstand wenigstens einer der Stützen zu dem zugeordneten stirnseitigen Ende veränderbar ist.

10. Tragbalkeneinheit nach Anspruch 9, dadurch gekennzeichnet, dass zur Veränderung des Abstands wenigstens eine mechanisch oder/und elektrisch oder/und fluidisch betätigbare Stelleinrichtung vorgesehen ist.

11. Tragbalkeneinheit nach einem der Ansprüche 1 - 10, dadurch gekennzeichnet, dass der erste Teiltragbalken durch wenigstens zwei Stützenpaare am zweiten Teiltragbalken abgestützt ist, wobei jedes der wenigstens zwei Stützenpaare zwei Stützen umfasst.

12. Tragbalkeneinheit nach Anspruch 11, dadurch gekennzeichnet, dass die wenigstens zwei Stützenpaare in Längsrichtung des ersten Teiltragbalkens symmetrisch zur Längsmitte des ersten Teiltragbalkens angeordnet sind.

13. Tragbalkeneinheit nach einem der Ansprüche 11 oder 12, dadurch gekennzeichnet, dass die zwei Stützen wenigstens eines Stützenpaares bezüglich der Längsachse des ersten Teiltragbalkens an im wesentlichen der gleichen Längsposition angeordnet sind.

14. Tragbalkeneinheit nach einem der Ansprüche 11 - 13, dadurch gekennzeichnet, dass die zwei Stützen wenigstens eines Stützenpaares bezüglich der Längsachse des ersten Teiltragbalkens an unterschiedlichen Längspositionen angeordnet sind.

15. Tragbalkeneinheit nach einem der Ansprüche 6 - 14, dadurch gekennzeichnet, dass wenigstens eine der Stützen derart ausgebildet oder/und angeordnet ist, dass sie Kräfte oder/und Momente vom ersten Teiltragbalken zum zweiten Teiltragbalken und umgekehrt überträgt.

16. Tragbalkeneinheit nach einem der Ansprüche 1 - 15, dadurch gekennzeichnet, dass eine Verdrehung des ersten Teiltragbalkens und zweiten Teiltragbalkens relativ zueinander verhindert ist.

17. Tragbalkeneinheit nach einem der Ansprüche 1 - 16, dadurch gekennzeichnet, dass wenigstens eine Stütze wenigstens ein vorzugsweise aus Kunststoff gefertigtes Dämpfungselement umfasst.

18. Tragbalkeneinheit nach Anspruch 17, dadurch gekennzeichnet, dass wenigstens eine Stütze wenigstens ein im Verhältnis zur Elastizität des Dämpfungselementes im Wesentlichen starres Element umfasst, welches mit dem Dämpfungselement zur Abstützung des ersten Teiltragbalkens auf dem zweiten Teiltragbalken zusammenwirkt.

19. Tragbalkeneinheit nach einem der Ansprüche 1 - 18, dadurch gekennzeichnet, dass der zweite Teiltragbalken um eine zur Längsachse des ersten Teiltragbalkens im Wesentlichen parallele Achse drehbar oder/und schwenkbar gelagert ist.

20. Tragbalkeneineit nach Anspruch 19, dadurch gekennzeichnet, dass die Dreh- oder/und Schwenkachse des zweiten Teiltragbalkens im Wesentlichen mit einer Anstelllinie zusammenfällt, längs derer die Funktionseinheit gegen einen laufenden Untergrund angestellt ist.

21. Tragbalkeneinheit nach einem der Ansprüche 1 - 20, dadurch gekennzeichnet, dass die Funktionseinheit eine Rakeleinrichtung ist, beispielsweise umfassend einen Rakelstab oder/und eine Rakelklinge oder/und eine Luftbürste.

22. Tragbalkeneinheit nach Anspruch 21, dadurch gekennzeichnet, dass die Funktionseinheit eine Rakelklinge umfasst, wobei die Anstelllinie durch die Klingenspitze verläuft.

23. Tragbalkeneinheit nach einem der Ansprüche 1 - 22, dadurch gekennzeichnet, dass die Lagerung des zweiten Teiltragbalkens auf Führerseite und Triebseite der Maschine erfolgt.

24. Tragbalkeneinheit nach einem der Ansprüche 1 - 23, dadurch gekennzeichnet, dass sie mit wenigstens einer Einrichtung zum Verstellen oder/und Positionieren des zweiten Teiltragbalkens zusammenwirkt.

25. Tragbalkeneinheit nach Anspruch 1 - 24, dadurch gekennzeichnet, dass der erste Teiltragbalken im Bereich seiner Längserstreckung Öffnungen aufweist, durch welche der zweite Teiltragbalken zugänglich ist.

26. Tragbalkeneinheit nach den Ansprüchen 24 und 25, dadurch gekennzeichnet, dass die wenigstens eine Verstell- oder/und Positioniereinrichtung ein Stellelement umfasst, das mit dem zweiten Teiltragbalken im Bereich seiner Längsmitte zusammenwirkt.

27. Tragbalkeneinheit nach den Ansprüchen 24 und 25, dadurch gekennzeichnet, dass die wenigstens eine Verstell- oder/und Positioniereinrichtung ein Stellelement umfasst, das mit dem zweiten Teiltragbalken im Bereich wenigstens einer Stützstelle zusammenwirkt.

28. Tragbalkeneinheit nach Anspruch 24 oder 25, dadurch gekennzeichnet, dass die wenigstens eine Verstell- oder/und Positioniereinrichtung ein Stellelement umfasst, das mit dem zweiten Teiltragbalken im Bereich wenigstens einer seiner Lagerstellen zusammenwirkt.

29. Tragbalkeneinheit nach einem der Ansprüche 1 - 28, dadurch gekennzeichnet, dass der zweite Teiltragbalken zumindest abschnittsweise rohrartig ausgebildet ist.

30. Tragbalkeneinheit nach einem der Ansprüche 1 - 29, dadurch gekennzeichnet, dass die Außenkontur des zweiten Teiltragbalkens der Innenkontur des ersten Teiltragbalkens zumindest im Bereich der gemeinsamen Erstreckung angenähert ist.

31. Tragbalkeneinheit nach einem der Ansprüche 24 - 30, dadurch gekennzeichnet, dass die Verstell- oder/und Positioniereinrichtung weiterhin eine Erfassungseinheit zum Erfassen einer Verschiebung der Funktionseinheit infolge der Durchbiegung des zweiten Teiltragbalkens sowie eine Auswerteeinheit umfasst, welche basierend auf den Erfassungssignalen der Erfassungseinheit Stellsignale für das wenigstens eine Stellelement ermittelt.

32. Tragbalkeneinheit nach Anspruch 31, dadurch gekennzeichnet, dass die Verstell- oder/und Positioniereinrichtung eine Betriebszustandserfassungseinheit umfasst, welche den aktuellen Betriebszustand der Maschine, beispielsweise basierend auf den Parametern Maschinengeschwindigkeit oder/und Linienpressung der Funktionseinheit oder/und Balkenlage oder/und dergleichen, erfasst und dass die Auswerteeinheit weiterhin ein Stellsignal für das wenigstens eine Stellelement basierend auf dem von der Betriebszustandserfassungseinheit erfassten Betriebszustand ermittelt.

33. Verfahren zur Regelung der Position oder/und Orientierung einer Tragbalkeneinheit nach einem der Ansprüche 31 oder 32, dadurch gekennzeichnet, dass das Verfahren folgende Schritte umfasst:
- Erfassen der Verlagerung der Funktionseinheit mit einer Erfassungseinheit infolge von Durchbiegung des zweiten Teiltragbalkens,
- Ermitteln von Stellsignalen durch eine Auswerteeinheit, basierend auf den Erfassungssignalen der Erfassungseinheit,
- Positionieren der Tragbalkeneinheit gemäß der ermittelten Stellsignale.

34. Verfahren zur Regelung der Krafteinwirkung auf den zweiten Teiltragbalken einer Tragbalkeneinheit nach Anspruch 32, dadurch gekennzeichnet, dass das Verfahren folgende Schritte umfasst:
- Ermittlung des Betriebszustandes der Anlage, beispielsweise anhand der Parameter Maschinengeschwindigkeit oder/und Linienpressung der Funktionseinheit oder/und Balkenposition oder/und dergleichen durch eine Betriebszustandserfassungseinheit,
- Ermittlung von Stellsignalen für das wenigstens eine Stellelement durch eine Auswerteeinheit, basierend auf dem von der Betriebszustandserfassungseinheit erfassten Betriebszustand,
- Einstellen der Zusatzkraft an einem Stellelement gemäß der ermittelten Stellsignale.
